**Europäisches Patentamt**

**European Patent Office**

**Office européen des brevets**

(11) Publication number: **0 045 324**
**A1**

## (12) EUROPEAN PATENT APPLICATION

(21) Application number: **80104612.9**

(22) Date of filing: **06.08.80**

(51) Int. Cl.³: **G 11 B 15/66**

(43) Date of publication of application:
**10.02.82 Bulletin 82/6**

(84) Designated Contracting States:
**AT BE CH FR IT LI LU NL SE**

(71) Applicant: **Efuti Giken Co.,LTD.**
**6-1-12, Rokkakubashi**
**Kanagawa-ku Yokohama-shi Kanagawa-ken(JP)**

(71) Applicant: **Funai Electric Co., Ltd.**
**7-627 Nakagaido**
**Daito-shi Osaka(JP)**

(72) Inventor: **Kawai, Tsutomu**
**28, Ogawa-cho Yokosuka-shi**
**Kanagawa-ken(JP)**

(74) Representative: **Lehn, Werner, Dipl.-Ing. et al,**
**Hoffmann. Eitle & Partner Patentanwälte**
**Arabellastrasse 4**
**D-8000 München 81(DE)**

(54) **A video tape recorder.**

㉗ A video tape recorder for a cassette with two tape reels
(22, 23) lying in a common plane has a tape feed reel, a take
up reel, a pinch roller (4), a tape draw out pin (5) and a rotary
head (6) for providing record/playback signals to the tape
(24). When the cassette is loaded in the recorder the tape (24)
therein is entrained by the pinch roller (4) and the draw out
pin (5), which are moved in opposite arcuate directions about
the rotary head (6) to thereby pass the tape (24) round part of
the rotary head (6). During its movement the pinch roller (4)
is urged by a ramp downwardly against a resilient bias to
thereby move the tape (24) out of the common plane so that
is passes round the rotary head (6) at an inclined angle.

*Fig.5.*

-1-

## A video tape recorder

The present invention relates to a video tape recorder and particularly, but not exclusively, to a portable video tape recorder utilising cassettes.

For tape recorders of this type, various constructions have hitherto been offered. Many of them have adopted a system in which the tape is drawn out of the cassette through a draw-out pin, and is loaded on such elements as a rotary head, capstan and voice head. Since the record and play signals to the tape provided by the rotary head are formed at a slope on the tape surface, however, normally, the tape wound on a pair of reels in the cassette placed on same level or different levels is drawn out by means of draw-out pin and is then loaded on the rotary head which is inclined relative to the axes of the cassette reels. However, installing the rotary head and draw-out pin, slanted to the video tape recorder body involves problems in matters of design and assembly, and moreover, slanted installations invite failures and difficulties in repairs. A cassette having a pair of reels placed on different planes requires a greater thickness, detracting from the desirable attribute of a thin and compact recorder body.

According to the present invention there is provided a video tape recorder having means for receiving a magnetic tape cassette with left and right hand reels lying in a common plane, a rotary head having an axis of rotation perpendicular to said plane and spaced from said means, a loading mechanism including a tape draw-out pin and a pinch roller for drawing tape out of the cassette and into engagement with said rotary head and at least one electric head, the pinch roller being in engagement with a capstan for transporting the tape when the mechanism is fully loaded, the tape being drawn by one of said draw out pin and pinch roller parallel to said plane and by the other at an angle to said plane so as to pass at a slope round said rotary head.

An embodiment of this invention will now be described by way of example with reference to the accompanying drawings in which:-

Figure 1 shows the overall mechanism of a video tape recorder in the inoperative state;

Figure 2 through 4 present explanatory views of the cassette;

Figure 5 gives a view for explanation of its operation, when it is in its playing state, with the cassette mounted and the tape loaded;

Figures 6 and 7 show views for explanation of the guide for pinch roller;

Figure 8 denotes a side view of draw-out pin;

Figure 9 designates a left side view of the set-up of Figure 5, showing its unloaded state;

Figure 10 indicates a right side view of the same, showing its unloaded state;

Figure 11 reveals an explanatory side view showing its loaded state; and

Figure 12 displays a similar explanatory side view corresponding to Figure 10.

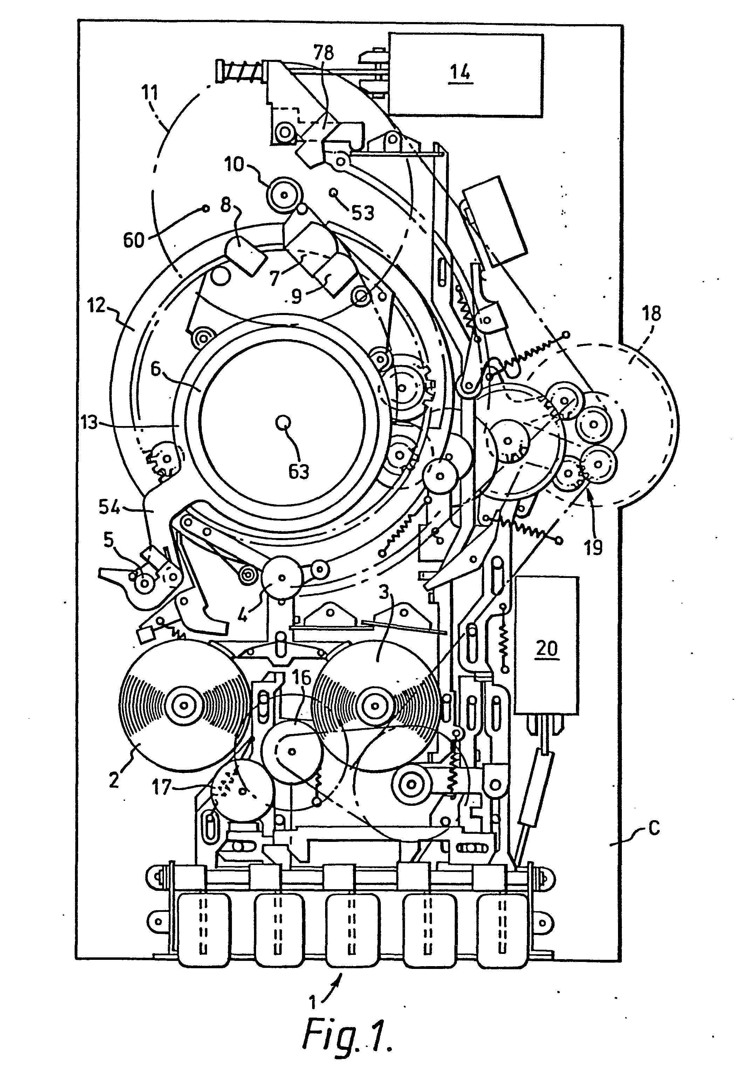

Referring now to Figure 1, reference numeral 1 designates a group of operation buttons, 2 a feeding reel, 3 a take-up reel, 4 a pinch-roller, 5 a tape draw-out pin, 6 a rotary head, 7 a voice control head, 8 a whole width erasure head, 9 a voice erasure head, 10 a capstan, 11 a flywheel, 12 a first loading gear ring having the aforementioned pinch roller 4 pivotally mounted thereon, 13 a second loading gear ring having the aforementioned tape draw-out pin 5 provided thereon, 14 a plunger for pressing pinch-roller 4 onto capstan 10, 15 an idler for driving the take-up reel 3, 16 a rapid transmission gear, 18 a drive motor, 19 a group of transmission gears for transmitting the rotation of motor 18 to the aforementioned first loading gear ring 12 and the second loading gear ring 13, and 20 designates a plunger for an automatic stop function. Respective particular constructions and their interlocking operations are described hereunder:

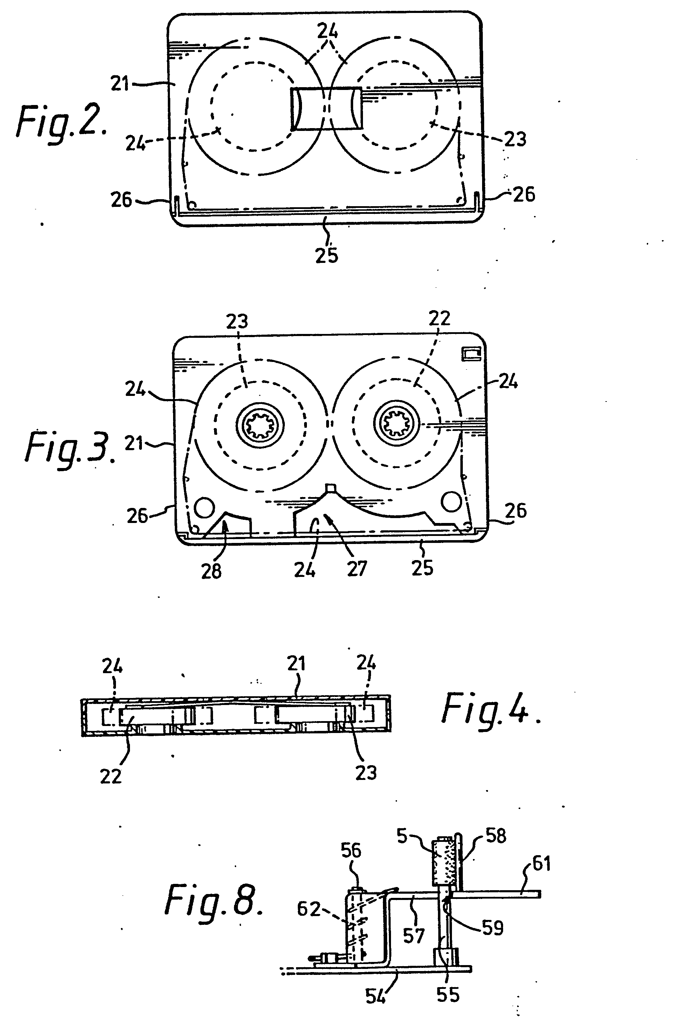

Referring now to Figures 2 to 5 also, a video tape cassette 21 employed in this embodiment, is about 106 mm in lateral length, 68 mm in longitudinal length and 12 mm in thickness, this being the smallest size of vidio tape cassette presently available, and is nearly as small as cassettes often in use in voice only tape recorders. As shown in the plan view of Figure 2, the bottom view of Figure 3 and the sectional view of Figure 4, the cassette contains a magnetic vidio tape wound on a pair of tape reels 22 and 23 lying horizontally on the same plane. The said cassette 21 has an openable cover 25 pivotally mounted on sides of its front edge tape draw-out surface, the cover being normally urged to its closed state by means of springs. Furthermore, the said cassette 21 has, as shown in Figure 3, at the front of its bottom wall, a space 27 for housing the aforementioned pinch roller 4 and another space 28 for receiving the aforementioned tape draw-out pin 5.

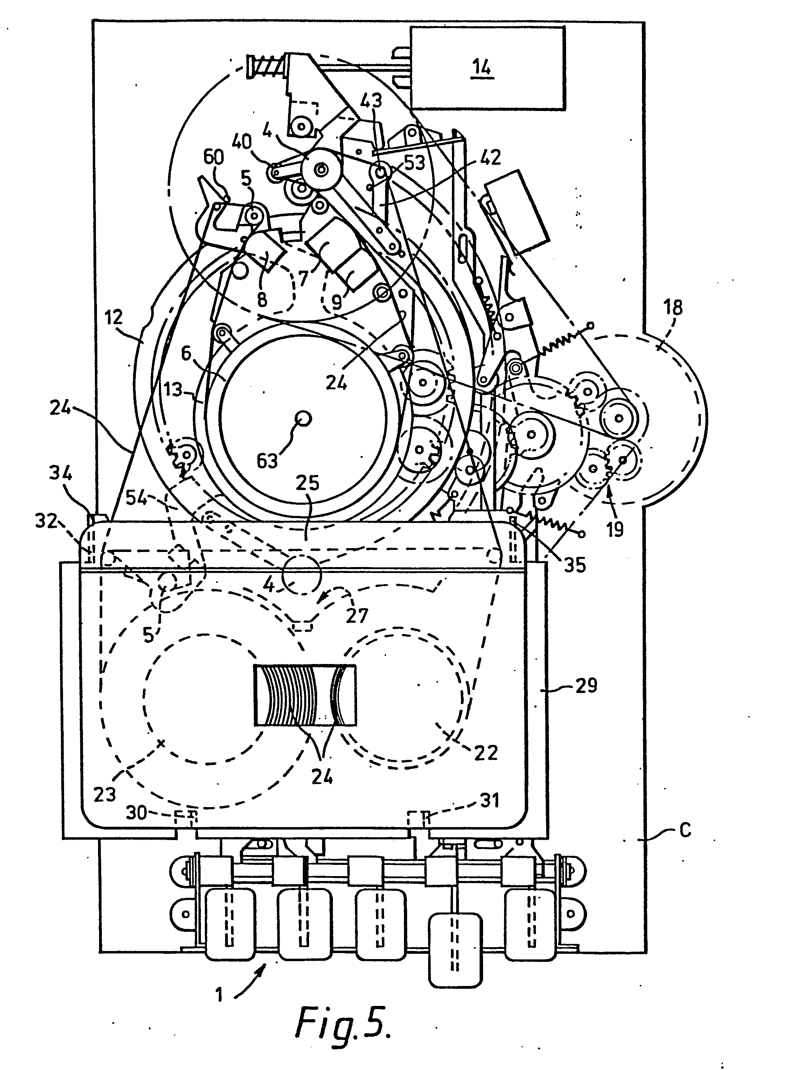

Figure 5 shows the said cassette 21 set on cassette mount 29 located above the aforementioned reels 2 and 3. This cassette mount 29 has pieces 30, 31, 32 and 33 for accurately determining the level of the cassette 21 placed thereon, the said pieces 32 and 33 further having abutments 34 and 35 abutting on the openable cover 25. As the cassette 21 is set on the said cassette mount 29 in the state as shown in Figure 5, the tip of the openable cover 25 contacts the aforementioned abutments 34 and 35, to thereby open the said cover 25. Under this condition, the pinch roller 4 pivotally mounted on the aforementioned first loading gear ring 12 and the tape draw-out pin appended to the second loading gear ring 13 are located inside the aforementioned spaces 27 and 28 formed in front of the cassette. In order to obtain the loading state (recording and playing states) in which the tape 24 is being drawn out as shown by a solid line in Figure 5, the aforementioned pinch roller 4 and the draw-out pin 5 are placed behind the tape 24 as shown in outline inside the aforementioned spaces 27 and 28. Then, by turning the first loading gear ring 12 and the second loading gear ring 13 in the mutually opposing directions, as shown by the arrows, the pinch roller 4 and the draw-out pin 5 are moved anti-clockwise respectively in the loading direction, causing the tape 24 to be drawn out.  The tape 24 is, then, loaded on i.e. brought into operative engagement with such electrical elements as the aforementioned rotary head 6, voice control head 7, whole width erasure head 8, and voice erasure head 9. Furthermore, the drawn-out tape 24 is pressed onto the capstan 10 by means of the pinch roller 4, and by the rotation of the capstan 10 effected by motor 18 and the taking-up on the take-up reel through idler 15, the tape driving for recording and playing is performed.

The turning of the first loading gear ring 12 and that of the second loading gear ring 13 necessary for such loading of tape 24 are effected by appropriately interlocking the running of the motor 18 to them through the aforementioned transmission gear group 19.

Accordingly, the first loading gear ring 12 and the second loading gear ring 13 are respectively reversed to the arrow directions, to drive the pinch roller 4 and the draw-out pin 5 located in the spaces 27 and 28 in the cassette 21 in concert with the movements of the aforementioned rings 12 and 13, so that by means of the pinch roller 4 and the draw-out pin 5, the tape 24 in the cassette 21 is drawn out on the opposing sides around the rotary head 6.  On the other hand, the pinch roller 4 presses tape 24 on capstan 10, actuated by plunger 14.  Thereupon, the tape 24 is in operative engagement, from the side from which it is taken out by the draw-out pin 5, successively through the whole width erasure head 8, rotary head 6, voice erasure head 9, voice control head 7, and capstan 10, to the pinch roller 4 side.

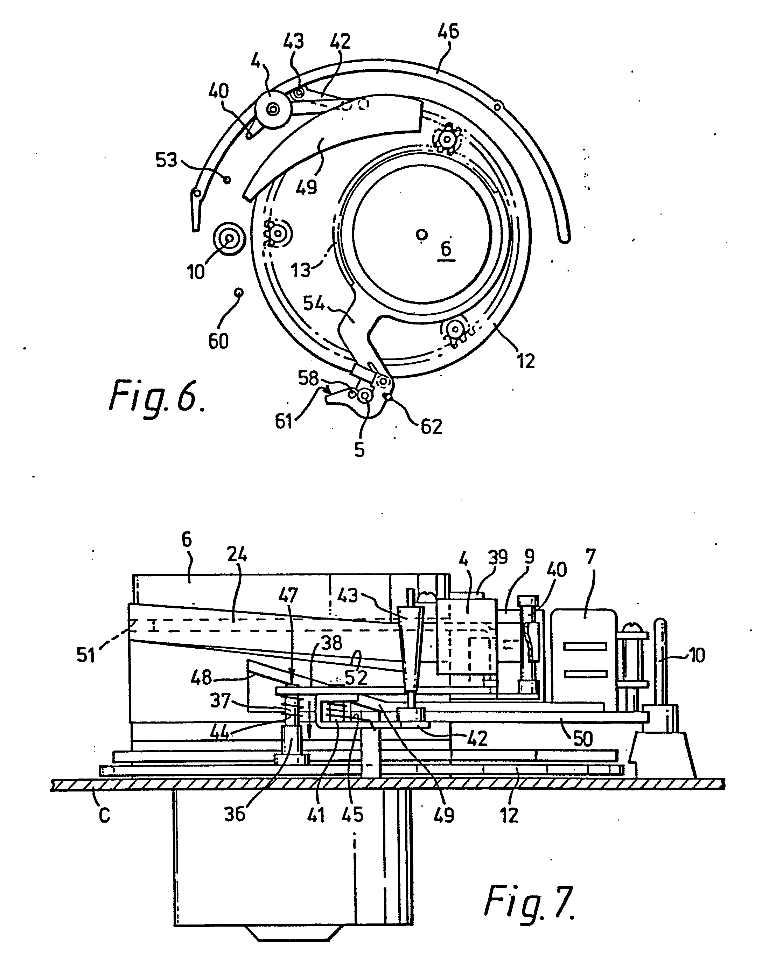

Further describing in detail with reference to Figure 6 also, the mechanism required for supporting the tape 24 at the time of the aforementioned loading, pinch roller 4 mounted on the aforementioned ring 12 is pivotally mounted on one end of an arm 38, the other end of which is pivotally mounted through a shaft 37 on the cylinder 36 part fixed on ring 12. Furthermore, the said arm 38 has a tip pin 40, intermediate its length, a taper roller 43 is provided on one end of a small arm 42 pivotally attached to the arm 38 at the other end through axis 41. The shaft 37 fixed to the aforementioned arm 38 is put in the aforementioned cylinder part 36 for free up-down motion, with spring 44 interposed therebetween, and the pinch roller 4 is allowed to move in the circumferential direction round ring 12 (the arrow direction in Figure 6). The aforementioned tapered roller 43 is also so provided with a spring 45 as to be allowed to move in the circumferential direction around ring 12.

Furthermore, in the loading orbit including the said pinch roller 4, etc., loading guide 46 is appropriately set in place on chassis C. Since the aforementioned pinch roller 4 and tapered roller 43 are urged by means of springs 44 and 45 outwardly along the outer circumference of ring 12, the axis 39 of pinch roller 4 and taper roller 43 are guided from the starting point to the terminal point of loading in the state of abutting on the said guide 46 and therealong.
Moreover, in the loading orbit of the said pinch roller 4,
guide plate 49 having a tapered surface 48 formed thereon
abutting top end 47 of axis 37 on which arm 38 is fixed is
securely held on a head base 50, on which heads 7, 8 and 9
are mounted. The tape 24 drawn out by means of pinch roller
4 for simultaneous loading is hung along tape guide flute 52
formed with a slope corresponding to head gap 51 at the
cylinder part of rotary head 6, whereupon the top end of the
aforementioned shaft 37 is guided by the tapered surface 48
formed on the lower surface of the aforementioned guide plate
49 corresponding to the said guide flute 52. Then, pinch
roller 4 on which tape 24 is carried moves downward in
defiance of the force of spring 44 inserted between arm 38
and cylinder 36 part, causing tape 24 to be hung with a slope
from the side of relatively moving draw-out pin 5 toward tape
guide flute 52 of rotary head 6, for facility in taking
recording with a slope of record signals. Still more, tapered
roller 43 mounted on small arm 42 pivotally attached to arm
38 of the aforementioned pinch roller 4 impinges on pin 53
located at the terminal point of the loading, as shown in
Figures 1 and 6; then, small arm 42 is rotated due to the
force of spring 45, and the tapered roller 43 guiding tape 24
thereon lets the part of running tape move outwardly, thereby
preventing the tape at this point contacting another part of
the tape being guided around the side of rotary head 6 and
heads 7 and 8.

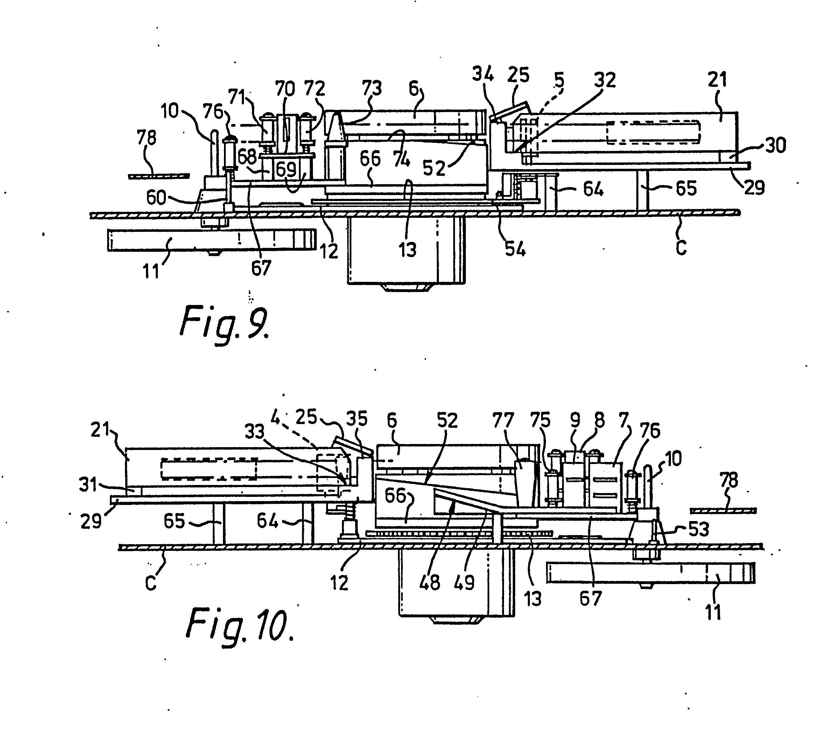

Further still, the aforementioned draw-out pin 5
is, as shown in Figures 6 and 8, pivotally mounted on top of

-8-

a shaft 55 held upright on arm 54 extending from second loading gear ring 13. The said arm 54 has also swing plate 57 pivotally mounted on axis 56 fixed thereon. The said swing plate 57 is pivotally mounted on arm 54 through axis 56 at a position somewhat nearer to the ring 13 than the aforementioned draw-out pin 5, and has tape pin 58 formed outwardly of draw-out pin 5, the said plate 57 being in a configuration extending from the axis 56 through bent part 59 outside of and circumscribing the aforementioned shaft 55 and toward the side forming tape pin 58. On its outer tip, is formed a protrusion 61 which is arranged to impinge on pin 60 formed at a position corresponding to the aforementioned pin 53 at the terminal point of the loading. The aforementioned bent part 59 of the said plate 57 is normally urged by the spring 62 provided around the aforementioned pivot axis 56 to abut on the circumferential surface of shaft 55 of draw-out pin 5. Then, as the aforementioned draw-out pin 5 is transferred to the terminal point of loading, the protrusion 61 at the tip of the aforementioned swing plate 57 impinges on pin 60; consequently, the said plate 57 rotates in defiance of the force of spring 62, causing pin 58 on which part of the running tape 24 is hanging to depart outwardly from the said draw-out pin 5, thereby forestalling its back rubbing with another part of tape being guided to the side of rotary head 6 and head 8.

Accordingly, as shown in Figure 5, the tape 24 drawn out from reels 22 and 23 held in cassette 21 is loaded from the side of tape reel 23 engaged on the shaft of feeding reel 2, successively through the aforementioned draw-out pin 5, whole width erasure head 8, rotary head 6, voice erasure head 9, voice control head 7, between capstan 10 and pinch roller 4, pin 40, pinch roller 4 again and tapered roller 43, in the order mentioned, to the side of tape reel 22 engaged on the shaft of take-up reel 3.

The aforementioned capstan 10 and head group 7, 8 and 9 are positioned oppositely to the pair of reels 2 and 3, with the rotary head 6 interposed therebetween. Especially, in the said embodiment, capstan 10 and central axis 63 of rotary head 6 and the point midway between the axes of the pair of reels 2 and 3 lie on a straight line. The first loading gear ring 12 and the second loading gear ring 13 have also their axes on the aforementioned straight line, so that the tape may be drawn out nearly in the shape of lambda, with pinch roller 4 and draw-out pin 5 respectively loaded on or unloaded from heads 7, 8 and 9 in the vicinity of the circumference of rotary head 6. In that way, the designing of the mechanism required for loading is simplified, and since small tape cassettes may be employed as above described, the mechanism as a whole is provided in a simplified and compact form.

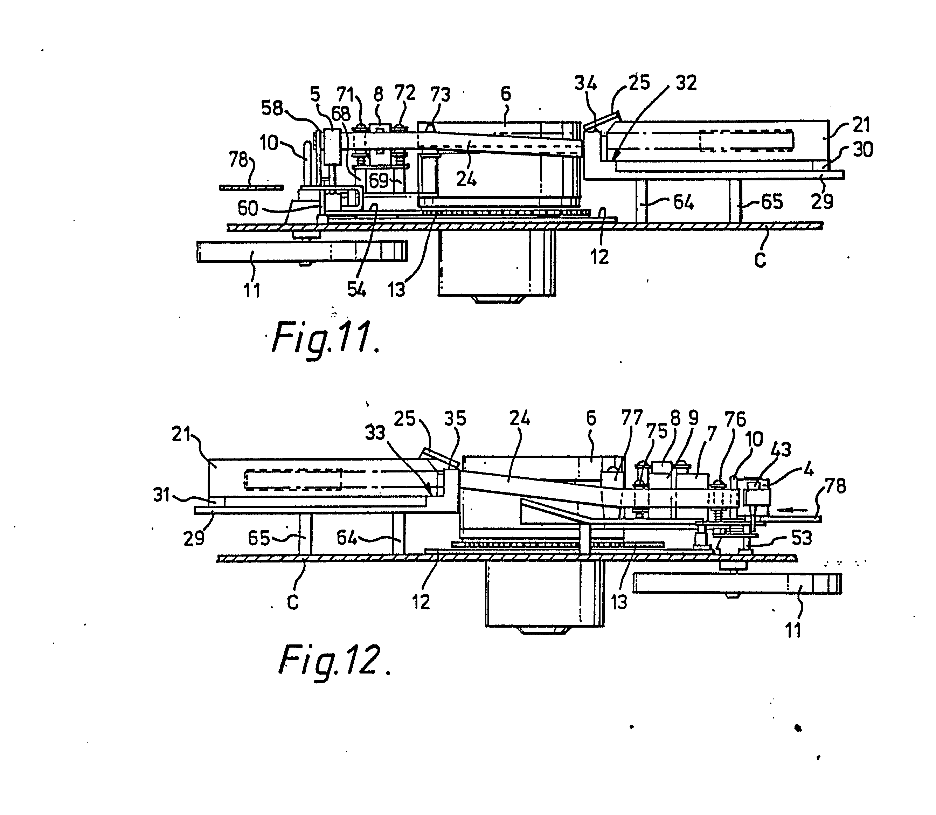

Figure 9 gives a left side view of the set-up of Figure 5, and Figure 10 a right side view of the same, both being in its unloaded state. Figure 11 similarly shows a left side view of the set-up of Figure 5, and Figure 12 a right side view of the same, both being in its loaded state. As shown in these figures, the cassette 21 is placed on the levelling pieces 30 - 33 on the aforementioned cassette mount 29 which is fixed on chassis C through supports 64 and 65. On the other hand, on rotary head 6, supporting ring 66 is securely set, and on the said ring 66, plate 67 for mounting such electrical elements as whole width erasure head, etc., thereon is rigidly held. As shown in Figure 9 and 11, whole width erasure head 8 is equipped on supporting plate 70 mounted on the aforementioned plate 67 through supports 68 and 69, and on both sides of this head 8, are located tape guide pins 71 and 72 designed for free level adjustment. The whole width erasure head 8 and tape guide pins 71 and 72 are positioned in level with the video tape 24 drawn out of the aforementioned cassette 21. One 72 of the guide pins is nearly correspondingly level with the top-most portion 74 of tape guide flute 52 of the rotary head 6, the pins 72 and 74 being interposed by a tapered pin 73. Accordingly, tape draw-out pin 5 standing with its axis parallel to that of the aforementioned rotary head 6 enables tape 24 to be horizontally drawn out on the left side of rotary head 6, as viewed in Figure 1 to bring about the loading state shown in Figure 11 from the unloaded state of Figure 9.

On the other hand, on the aforementioned plate 67, voice control head 7 and voice erasure head 9 are mounted at a level lower than the aforementioned whole width erasure head 8, as shown in Figures 10 and 12, and on both sides of these heads 7 and 9, tape guide pins 75 and 76 are located, designed for free level adjustment. Then, on the right side of rotary head 6, that is on the other side of the tape drawing-out mechanism, by dint of the pinch roller 4 going down, guided by the tapered surface 48 of guide plate 49, tape 24 is drawn at a slope along the tape guide flute 52 of rotary head 6, passed through tapered pin 77, the aforementioned guide pins 75 and 76, voice control head 7, and wound about voice erasure head 9, thereby bringing the unloaded state of Figure 10 to the loading state of Figure 12. Under the loading state, the pinch roller 4 is pressed onto capstan 10 through operation plate 78 interlocked to the on-operation of the aforementioned plunger 14, thereby driving tape 24. Because this recorder is designed to allow the said tape to run at a slope, adoption of a small cassette held on the same level is permissible; holding the rotary heads and draw-out pin upright on the chassis is possible; and with the tape-drawing-out part of the cassette and the starting edge on the tape-winding part of rotary head held in same plane loading may be effected by means of vertically disposed draw-out pin and pinch roller. Thus, this arrangement has an advantageous effect of providing a compact mechanism which permits simplified design and assembling works, and which is reliable and relatively easy to repair.

As described hereabove, according to this invention, the tape recorder is made up of a cassette having right and left reels lying in a common horizontal plane, rotary head having an axis perpendicular to said plane and spaced from the cassette, and the loading mechanism for drawing out the magnetic tape from this cassette, to wind it on the aforementioned rotary head. The aforementioned loading mechanism has a draw-out pin and pinch roller for drawing out the tape, and passing it around such electrical elements as rotary head, record erasure head, and driving it at a constant speed through the capstan. Through either one of them, the tape is horizontally drawn out, while through the other, the said tape is wound with a slope, about vertical heads by allowing its up-down movements in the direction of the aforementioned vertical heads. For this reason, a cassette having a pair of reels in the same plane may be employed, with the rotary head and draw-out pin, held upright, so that the tape drawing-out part and the starting edge of the tape-winding part of the rotary head may be brought level with each other, enabling the loading to be made by means of a draw-out pin and a pinch roller which have axes perpendicular to the plane of the cassette reels.

Claims:

1. Video tape recorder, characterized by means for receiving a magnetic tape cassette (21) with left and right hand reels (22, 23) lying in a common plane, a rotary head (6) having an axis of rotation perpendicular to said plane and spaced from said means, a loading mechanism including a tape draw out pin (5) and a pinch roller (4) for drawing tape (24) out of the cassette (21) and into engagement with said rotary head (6) and at least one electric head (7, 8, 9), the pinch roller (4) being in engagement with a capstan (10) for transporting the tape (24) when the mechanism is fully loaded, the tape (24) being drawn by one of said draw out pin (5) and pinch roller (4) parallel to said plane and by the other at an angle to said plane so as to pass at a slope round said rotary head (6).

2. Video tape recorder as claimed in claim 1, characterized in that said draw out pin (5) and said pinch roller (4) in the unloaded condition of the recorder are positioned so that when a cassette (21) is loaded into the recorder the draw out pin (5) and pinch roller (4) lie in the same plane as the tape (24).

3. Video tape recorder as claimed in claim 1 or 2, characterized in that the draw out pin (5) and pinch roller (4) are movable arcuately about the axis of the rotary head (6) to draw tape (24) out of the cassette (21).

4. Video tape recorder as claimed in claim 3, characterized in that the draw out pin (5) and pinch roller (4) are moved in opposite directions.

5. Video tape recorder as claimed in claim 3 or 4, characterized in that in the operative loaded position, the draw out pin (5) and pinch roller (4) are in a position on the opposite side of the rotary head (6) to the means for receiving a cassette (21).

6. Video tape recorder as claimed in any one of claims 1 to 5, characterized in that the axis of the capstan (10), the axis of the rotary head (6), and a point midway between the axes of the two reels (22, 23) of a cassette (21) in the loaded condition, lie on a straight line.

7. Video tape recorder as claimed in any one of claims 1 to 6, characterized in that said at least one electric head comprises one or more of a full tape width erasure head (8), a voice erasure head (9) and a voice control head (7).

8. Video tape recorder as claimed in any one of the preceding claims, characterized in that the pinch roller (4) is movable in a direction perpendicular to said plane against a resilient bias.

9. Video tape recorder as claimed in claim 8, characterized by ramp means (49) engageable operatively by the pinch roller (4) when the roller is moved to the loaded position to urge the pinch roller (4) downwardly against the resilient bias to thereby transport the tape (24) at an angle to said plane.

10. Video tape recorder as claimed in any one of claims 1 to 9, characterized in that the tape (24) is guided by a guidance system including at least one tapered guide roller (43) and an inclined guide flute (52) of the rotary head (6).

0045324

1/6

Fig.1.

Fig.2.

Fig.3.

Fig.4.

Fig.8.

*Fig.5.*

Fig.6.

Fig.7.

0045324

4/6

Fig.9.

Fig.10.

Fig.11.

Fig.12.

0045324

## EUROPEAN SEARCH REPORT

European Patent Office

### DOCUMENTS CONSIDERED TO BE RELEVANT

| Category | Citation of document with indication, where appropriate, of relevant passages | Relevant to claim |
|---|---|---|
| X | US - A - 4 012 788 (DOUGLASS L. BLANDING)<br><br>* Column 4, line 14 - column 5, line 7; column 5, lines 31-60; column 6, line 36 - column 7, line 16; figures 1-5 * | 1,3-5 7 |
| X | GB - A - 2 020 878 (N.V. PHILIPS)<br><br>* Page 1, line 125 - page 2, line 78; figure 1 * | 1-5,7 |
| | FR - A - 2 281 623 (STAAR S.A.)<br><br>* Page 6, line 1 - page 7, line 25; figures 1-3 *<br>& US - A - 4 045 820 | 3,4 |
| | DE - A - 2 305 598 (NIPPON ELECTRIC CO. LTD.)<br><br>* Page 7, lines 14-29; figure 4 *<br>& US - A - 3 845 501 | 9 |
| | GB - A - 2 020 879 (N.V. PHILIPS)<br><br>* Page 2, line 87 - page 4, line 2; figures 4-6 * | 9,10 |

**CLASSIFICATION OF THE APPLICATION (Int. Cl.3)**

G 11 B 15/66

**TECHNICAL FIELDS SEARCHED (Int. Cl.3)**

G 11 B 15/66

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 09-03-1981 | RAHNER |

EPO Form 1503.1 06.78